# EUROPEAN PATENT APPLICATION

(11) **EP 1 695 624 A2**
(43) Date of publication of application: **30.08.2006**
(21) Application number: 06110459.2
(22) Date of filing: 27.02.2006
(51) Int. Cl.: A01N 57/20, A01N 25/30, A01N 25/02

(54) **Adjuvant for herbicidal formulations based on phosphonomethyl glycine and its salts**

(30) Priority: 28.02.2005 BR 0500921
(71) Applicant: Oxiteno S.A. Industria e Comercio, 01317-910 Sao Paulo SP (BR)
(72) Inventor: Lopes Moreno, Valter, Cep 09380-620, Santo André - SP (BR)
(74) Representative: Carpintero Lopez, Francisco

(57) **Abstract**

The invention refers to a surfactant-based composition mainly applicable as an adjuvant for glyphosate family herbicides aqueous soiutians, such as N-phosphonomethyl glycine, commonly used in the form of its salts, such as potassium salt

Composition based on surfactants mixture featured by comprising:
(a) one or more alkoxylated alkyl amines;
(b) one or more glycols and their derivatives or, yet, their mixtures;
(c) optionally water.

## Description

The invention refers to a surfactant-based composition mainly applicable as an adjuvant for glyphosate family herbicides aqueous solutions, such as N-phosphonomethyl glycine, particularly used in the form of potassium salts, monoisopropylamine or monoethanolamine,

Pesticides play an important role in society, as they are responsible for the growing food production for mankind.

Pesticides formulations are composed by an active ingredient (with biological activity) and an adjuvant composition containing one or a mixture of surfactants

The adjuvant's main role is to stabilize and enhance the active substance in order to more efficiently reach the target. The adjuvants' action is a complex process that affects the active ingredient spreading, adhesion and absorption on the vegetable surface, allowing the active ingredient to translocate from the vegetable surfaces to its inner layers transported via xylem and phloem,

Currently, adjuvants, as well as the active ingredient, have been recognized as indispensable agents for an improved agricultural performance.

Glyphosate salt-based herbicides are examples of the adjuvants use, because even being soluble in water; they require the addition of an adjuvant in order to meet the expected performance

The Patent US 5,888 934 refers to a glyphosate-based composition with a higher than 210 g/L concentration of glyphosate with alkyl polyglucoside surfactant and ethoxylated alcohol containing 8 to 20 ethoxylation degrees in its chain, varying from 2 to 50 ethoxy (EO) groups moles, for every alcohol mole. Alkyl glucoside / ethoxylated alcohol rate may vary from 1:5 up to 8:1.

The Patent WO 0015037 refers to a highly resistant aqueous concentrated containing potassium glyphosate with a higher than 400 g/L concentration and surfactant: alkoxylated alkyl amine, preferably ethoxylated and/or propoxylated, containing 8 to 22 carbon atoms in the alkyl group and a lkoxylation degree varying from 1 to 15 and still another surfactant, alkyl glucoside, considering that alkyl glucoside and alkoxylated amine rate may vary from 1:1 up to 5:1 parts in weight. Optionally, propylene glycol may be used as viscosity modifier, The purpose of this invention is almost totally based on alkyl glucoside's action. The intensive investigation of conventional surfactant systems has been emphasized showing it's quite difficult to reach surfactant effective levels providing a physically stable high concentration composition containing glyphosate salt such as the potassium one Alkyl polyglucoside inconveniently attracts insects due to its odor and sugar content

Conventional surfactant systems show that it is difficult to develop a surfactant mixture able to provide a highly stable potassium glyphosate solution

Aiming to develop:
- adjuvant composition to be used on herbicides formulation glyphosate-based;
- surfactant compositions which are stable even at 54 ° C;
- compositions with lower costs than the conventionally known ones;
- formulations showing stability at room temperature and homogeneous aspect or at least monophase;
- formulations showing surfactant concentration lower than the one used on herbicides formulation glyphosate-based, commonly known;
- formulations for which antifoam agents are not required as foam formation would be lower (mainly in the tank during herbicide application) than the convetional products known by those skilled in the art;
- compositions showing efficient formulation, requiring lower herbicide concentration for its application causing lower environmental exposure.

A high performance adjuvant composition has been developed in order to be added to Glyphosate-based (N-phosphonomethyl glycine) herbicides formulation and to its respective salt, Potassium, Monoisoprapylamine and Monoethanolamine.

This invention refers to a mixture of glycols and ethoxylated fatty amines, where glycol is the main agent that promotes synergy between ethoxylated fatty amines and respective glyphosate salt (N-phosphonomethyl glycine). The effect as a high performance adjuvant is related to final physical stability and synergetic mixture susceptibility to vegetable leaf surface, followed by surface tension reduction, enhancing herbicide absorption and translocation via vegetable's lymphatic system. The invention represents a technological breakthrough for those skilled in the art as the state-of-the-art documents proved that an efficient and stable, low surfactant content and low cost adjuvant composition was not believed to be possible.

The main Applicant's objective was to develop a high performance surfactant mixture showing stability concerning its trend to spread into two or more distinct phases. A high performance adjuvant composition has been developed to be added to herbicides based on N-phosphonomethyl glycine derivatives and their salts, with an homogeneous monophase appearance, comprising:
(a) one or more alkoxylated alkyl amines;
(b) one or more glycols and their derivatives or, yet, their mixtures;
(c) optionally water.

Alkyl amines may be non-saturated or not, containing alkyl groups with 8 to 2 2 linear or branched carbon atoms. Alkyl groups containing 16 to 18 carbon atoms are preferably used, as those derived from palmitic or hexadecanoic acid (C16), cis-9-hexadecenoic acid (C16:1), heptadecanoic acid (C17), cis-9-heptadecenoic acid (C17:1), stearic or octadecanoic acid (C18), oleic or cis-9-octadecenoic acid (C18:1), linoleic or cis-9, cis- 12-octadecadienoic acid (C18:2), linoleic or cis-9, cis-12, cis-15-octadecatrienoic acid (C 18:3), α-eleostearic or cis-9, t rans-11, frans-13-octadecatrienoic a cid (C 18:3), 4-oxo-cis 9, trans-11, trans-13 octadecatrienoic acid (C18:3), ricinoleic or 12-hydroxy-cis-9-octadecenoic acid (C18:1), di-hydroxy stearic acid (C18), or f rom their mixtures These alkyl a mines m ay b e of vegetable origin, preferably soybean, o r animal origin, such a s those found in tallow,

According to the purpose of the invention, it's possible to use an alkyl amine on composition showing an alkoxylation distribution degree from about 1 to about 20 of the alkaxylate. Although those skilled in the art believed t hat e thaxylated alkyl a mines with high ethoxylation degree were not compatible with composition as those with lower ethoxylation degree due to viscosity issues, the Applicant developed a composition using alkyl amines with both high and low alkoxylation degree. So, an alkoxylation distribution (or ethoxylation, to be more specific) degree ranging about 5 to 15 is preferable Alkoxy group preferably contains 2 or 3 carbon atom, preferably ethoxy or ethylene oxide and/or propylene oxide, preferably ethylene oxide I n order to solve the problem found by the technique man and also the viscosity problems, a viscosity modifier propylene glycol was used, but usually facing phase separation problems, The Applicant discovered that ethylene glycol solves both problems, concerning to viscosity and final mixture stability when used as an adjuvant for glyphosate solution or suspension formation, preferably potassium, maintaining its final stability

Glycols or their derivatives, usable according to the invention, are selected among the group that includes: MEG (monoethylene glycol), DEG (diethylene glycol), TEG (triethylene glycol), PGI (propylene glycol), other types of ethylene glycol monomers and/or comonomers, or their mixtures, such as monoethylene glycol and diethylene glycol mixture, or monoethylene glycol and propylene glycol. MEG, monoethylene glycol or its derivatives are preferably used.

Ethylene glycol is not only a viscosity modifier, but also works as a synergizer for the final mixture stabilization maintaining herbicide n-phosphonomethyl glycine or glyphosate-based diluted on formulation helping its translocation to be easier over pulverized leaves' surface, besides its anti-freezing properties

A preferable composition of the invention presents:
- from about 40 to about 80 % by weight of alkoxylated alkyl amines (a);
- at least about 11 % by weight of one or more glycol component (b), preferable at least about 25 % by weight;
- the presence of water (c) is from about 0 to about 10 % by weight.

The surfactant mixture, known as adjuvant, when in solution or a stable dispersion in water may at least represent 60 g/L related to the pesticidal composition, particularly vary from about 90 to about 150 g/L.

The following examples are meant to illustrate but not to limit the invention

### Examples - 01 to 06 (Glyphosate Monoisopropylamine salt)

### Example - 1

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 33 % w/w ethylene glycol and 4 0 % w/w water. Mixture should be carried under moderate stirring at about 100 rpm and 60° C [140° F]

### Example - 2

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 16.5% w/w ethylene glycol, 16.5% w/w diethylene glycol and 4.0 % w/w water Mixture should be carried under moderate stirring about 100 rpm and 60° C.

### Example - 3

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 6.5% w/w ethylene glycol, 6.8% w/w propylene glycol and 4.0 % w/w water. Mixture should be carried under moderate stirring about 100 rpm and 60° C

### Example - 4

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 33 % w/w diethylene glycol and 4.0 % w/w water. Mixture should be carried under moderate stirring about 100 rpm and 60° C.

### Example - 5

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 16.5% w/w Diethylene glycol and 16.5% w/w propylene glycol Mixture should be carried under moderate stirring about 100 rpm and 60° C.

### Example - 6

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 33 % w/w propylene glycol and 4.0 % w/w water. Mixture should be carried under moderate stirring about 100 rpm and 60° C

**Table 1**

| **Examples** | **01** | **02** | **03** | **04** | **05** | **06** |
|---|---|---|---|---|---|---|
| Tallow Fatty Amine with 1 to 9 moles EO | 58,0 | 58.0 | 58.0 | 58.0 | 58.0 | 58.0 |
| Tallow Fatty Amine with 10 to 20 moles EO | 5.0 | 5.0 | 5..0 | 5.0 | 5.0 | 5.0 |
| Monoethylene glycol | 33.0 | | | | | |
| Monoethylene glycol / Diethylene glycol 1:1 w/w | | 38.0 | | | | |
| Monoethylene glycol / Propylene glycol 1:1 w/w | | | 33.0 | | | |
| Diethylene glycol | | | | 33.0 | | |
| Diethylene glycol / Propylene glycol 1:1 wlw | | | | | 33.0 | |
| Propylene glycol 1:1 w/w | | | | | | 33.0 |
| Water | 4.0 | 4.0 | 4.0 | 4.0 | 4.0 | 40 |
| **Formulation Stability of N-phosphonomethy glycine Monoisopropylamine salt 480 g/L formulation, with 12 % of adjuvant mixture** | | | | | | |
| 03 months aging 54°C [130° F] | Stable, free of turbidness, or phase separation | | | | | |
| 03 months aging -10°C [14° F] | Stable, free of turbidness, or phase separation | | | | | |

### Examples - 07 to 12 (Glyphosate Monoisopropylamine salt)

### Example - 7

Mixture of 58 % w/w alkoxylated tallow fatty amine with a distribution from about 1 to about 9 moles of ethylene oxide, add 38 % w/w ethylene glycol and 4 0 % w/w water. Mixture should be carried under moderate stirring about 900 rpm and 60° C.

### Example - 8

Mixture of 58 % w/w alkoxylated tallow fatty amine with a distribution from about 1 to about 9 moles of ethylene oxide, 19.0% w/w ethylene glycol, 19.0% w/w diethylene glycol and 4.0 % w/w water. Mixture should be carried under moderate stirring about 100 rpm and 60° C.

### Example - 9

Mixture of 58 % w/w alkoxylated tallow fatty amine with a distribution from about 1 to about 9 moles of ethylene oxide, 19.0% w/w ethylene glycol 19.0% w/w propylene glycol and 4 0 % w/w water. Mixture should be carried under moderate stirring about 100 rpm and 60° C

### Example - 10

Mixture of 58 % w/w alkoxylated tallow fatty amine with a distribution from about 1 to about 9 moles of ethylene oxide, 38% w/w diethylene glycol and 4.0 % w/w water. Mixture should be carried under moderate stirring about 100 rpm and 60° C.

### Example - 11

Mixture of 58 % w/w alkoxylated tallow fatty amine with a distribution from about 1 to about 9 moles of ethylene oxide, 19.0% w/w diethylene glycol and 19.0% w/w propylene glycol. Mixture should be carried under moderate stirring about 100 rpm and 60° C.

### Example 12

Mixture of 58 % w/w alkoxylated tallow fatty amine with a distribution from about 1 to about 9 moles of ethylene oxide, 38.0% w/w propylene glycol and 4.0 % w/w water Mixture should be carried under moderate stirring about 100 rpm and 60° C.

**Table 2**

| **Examples** | **07** | **08** | **09** | **10** | **11** | **12** |
|---|---|---|---|---|---|---|
| Tallow Fatty Amine with 1 to 9 moles EO | 58.0 | 58.0 | 58.0 | 58.0 | 58.0 | 58.0 |
| Monoethylene glycol | 38.0 | | | | | |
| Monoethylene glycol / Diethylene glycol 1:1 w/w | | 38.0 | | | | |
| Monoethylene glycol / Propylene glycol 1:1 w/w | | | 38.0 | | | |
| Diethylene glycol | | | | 38.0 | | |
| Diethylene glycol / Propylene glycol 1:1 w/w | | | | | 38.0 | |
| Propylene glycol 1:1 w/w | | | | | | 38.0 |
| Water | 4.0 | 4.0 | 4.0 | 4.0 | 4.0 | 4.0 |
| **Stability formulation of N-phosphonomethy g lycine Monoisopropylamine salt 480 g/L formulations, with 12 % of adjuvant** | | | | | | |
| 03 months aging 54°C [130° F] | Stable, free of turbidness, or phase separation | | | | | |
| 03 months aging -10°C [14° F] | Stable, free of turbidness, or phase separation | | | | | |

### Examples - 13 to 18 (Glyphosate Potassium salt)

### Example - 13

Mixture of 58 % w/w alkoxylated tallow fatty amine with a distribution from about 1 to about 9 moles of ethylene oxide, with 5.0 % w/w alkoxylated tallow fatty amine with distribution of 10 to 20 moles of ethylene oxide, then, add 33 % w/w ethylene glycol and 4.0 % w/w water. Mixture should be carried under moderate stirring about 100 rpm and 60° C.

### Example - 14

Mixture of 58 % w/w alkoxylated tallow fatty amine with a distribution from about 1 to about 9 moles of ethylene oxide, with 5.0 %w/w alkoxylated tallow fatty amine with distribution of 10 to 20 moles of ethylene oxide, then, add 165% w/w ethylene glycol, 16.5% w/w diethylene glycol and 4.0 % w/w water. Mixture should be carried under moderate stirring about 100 rpm and 60° C.

### Example - 15

Mixture of 58 % w/w alkoxylated tallow fatty amine with a distribution from about 1 to about 9 moles of ethylene oxide, with 5.0 % w/w alkoxylated tallow fatty amine with distribution of 10 to 20 moles of ethylene oxide, then, add 165% w/w ethylene glycol, 16.5% w/w propylene glycol and 4.0 % w/w water. Mixture should be carried under moderate stirring about 100 rpm and 60° C

### Example - 16

Mixture of 58 % w/w alkoxylated tallow fatty amine with a distribution from about 1 to about 9 moles of ethylene oxide, with 5.0 % w/w alkoxylated tallow fatty amine with a distribution from about 10 to 20 moles of ethylene oxide, then, add 33 % w/w diethylene glycol and 4.0 % w/w water. Mixture should be carried under moderate stirring about 100 rpm and 60°C,

### Example - 17

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 16.5% w/w Diethylene glycol and 16.5% w/w Propylene glycol. Mixture should be carried under moderate stirring about 100 rpm and 60°C

### Example - 18

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 33 % w/w propylene glycol and 3,5 % w/w water. Mixture should be carried under moderate stirring about 100 rpm and 60° C.

**Table 3**

| **Examples** | **13** | **14** | **15** | **16** | **17** | **18** |
|---|---|---|---|---|---|---|
| Tallow Fatty Amine with 1 to 9 moles EO | 58.0 | 58.0 | 58.0 | 58.0 | 58.0 | 58.0 |
| Tallow Fatty Amine with 10 to 20 moles EO | 5.0 | 5.0 | 5.0 | 5.0 | 5.0 | 5.0 |
| Monoethylene glycol | 33.0 | | | | | |
| Monoethylene glycol / Diethylene glycol 1:1 w/w | | 33.0 | | | | |
| Monoethylene glycol / Propylene glycol 1:1 w/w | | | 33.0 | | | |
| Diethylene glycol | | | | 33.0 | | |
| Diethylene glycol / Propylene glycol 1:1 w/w | | | | | 33.0 | |
| Propylene glycol 1:1 w/w | | | | | | 33.0 |
| Water | 4.0 | 4.0 | 4.0 | 4.0 | 4 0 | 4.0 |
| **Formulation Stability of N-phosphonomethyl glycine Potassium salt 620 g/L formulation with 12% w/w of adjuvant** | | | | | | |
| 03 months aging 54°C [130° F] | Stable, free of turbidness, or phase separation | | | | | |
| 03 months aging -10°C [14° F] | Stable, free of turbidness, or phase | | | | | |
| | separation | | | | | |

### Examples -19 to 24 (Glyphosate Potassium salt)

### Example -19

Mixture of 58 % w/w alkoxylated tallow fatty amine with a distribution from about 1 to about 9 moles of ethylene oxide, add 38 % w/w ethylene glycol and 4.0 % w/w water. Mixture should be carried under moderate stirring about 100 rpm and 60° C.

### Example - 20

Mixture of 58 % w/w alkoxylated tallow fatty amine with a distribution from about 1 to about 9 moles of ethylene oxide, 19.0% w/w ethylene glycol, 19.0% w/w diethylene glycol and 4.0 % w/w water. Mixture should be carried under moderate stirring about 100 rpm and 60° C.

### Example - 21

Mixture of 58 % w/w alkoxylated tallow fatty amine with a distribution from about 1 to about 9 moles of ethylene oxide, 19.0% w/w ethylene glycol, 19.0% w/w propylene glycol and 4.0 % w/w water. Mixture should be carried under moderate stirring about 100 rpm and 60° C.

### Example - 22

Mixture of 58 % w/w alkoxylated tallow fatty amine with a distribution from about 1 to about 9 moles of ethylene oxide, 38% w/w diethylene glycol and 4.0 % w/w water. Mixture should be carried under moderate stirring about 100 rpm and 60° C

### Example - 23

Mixture of 58 % w/w alkoxylated tallow fatty amine with a distribution from about 1 to about 9 moles of ethylene oxide, 9.0% w/w diethylene glycol and 190% w/w propylene glycol. Mixture should be carried under moderate stirring about 100 rpm and 60° C.

### Example - 24

Mixture of 58 % w/w alkoxylated tallow fatty amine with a distribution from about 1 to about 9 moles of ethylene oxide, 38.0% w/w propylene glycol and 4.0 % w/w water. Mixture should be carried under moderate stirring about 100 rpm and 60° C.

**Table 4**

| **Examples** | **19** | **20** | **21** | **22** | **23** | **24** |
|---|---|---|---|---|---|---|
| Tallow fatty amine with 1 to 9 moles EO | 58.0 | 580 | 58.0 | 58.0 | 58.0 | 58.0 |
| Monoethylene glycol | 38.0 | | | | | |
| Monoethylene glycol / Diethylene glycol 1:1 w/w | | 38.0 | | | | |
| Monoethylene glycol / Propylene glycol 1:1 w/w | | | 38.0 | | | |
| Diethylene glycol | | | | 38.0 | | |
| Diethylene glycol / Propylene glycol 1:1 w/w | | | | | 38.0 | |
| Propylene glycol 1:1 w/w | | | | | | 38.0 |
| Water | 4.0 | 4.0 | 4,0 | 4,0 | 4.0 | 4 0 |
| **Formulation Stability of N-phosphonomethyl glycine Potassium salt 620 g/L formulation with 12% w/w of adjuvant** | | | | | | |
| 03 months aging 54°C [130° F] | Stable, free of turbidness, or phase separation | | | | | |
| 03 months aging -10°C [14° F] | Stable, free of turbidness, or phase separation | | | | | |

### Examples - 25 to 30 (Glyphosate Monoethanolamine salt)

### Example - 25

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 33 % w/w ethylene glycol and 4.0 % w/w water. Mixture should be carried under moderate stirring about 100 rpm and 60° C.

### Example - 26

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 16.5% w/w ethylene glycol, 16,5% w/w diethylene glycol and 40 % w/w water Mixture should be carried under moderate stirring about 100 rpm and 60°C,

### Example - 27

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 16.5% w/w ethylene glycol, 16.5% w/w Propylene glycol and 4.0 % w/w water. Mixture should be carried under moderate stirring about 100 rpm and 60° C

### Example - 28

Mixture of 58 % w/w alkoxylated tallow fatty amine with a distribution from about 1 to about 9 moles of ethylene oxide, with 5 0 % w/w alkoxylated tallow fatty amine with a distribution from about 10 to about 20 moles of ethylene oxide, then, add 33 % w/w diethylene glycol and 4.0 % w/w water. Mixture should be carried under moderate stirring about 100 rpm and 60° C.

### Example - 29

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 16.5% w/w Diethylene glycol and 16.5% w/w propylene glycol. Mixture should be carried under moderate stirring about 100 rpm and 60° C.

### Example - 30

Mixture of 58 % w/w alkoxylated tallow fatty amine with a distribution from about 1 to about 9 moles of ethylene oxide, with 5.0 % w/w alkoxylated tallow fatty amine with a distribution from about 10 to about 20 moles of ethylene oxide, then, add 33 % w/w propylene glycol and 4 0 % w/w water. Mixture should be carried under moderate stirring about 100 rpm and 60° C.

**Table 5**

| **Examples** | **25** | **26** | **27** | **28** | **29** | **30** |
|---|---|---|---|---|---|---|
| Tallow Fatty Amine with 1 to 9 moles EO | 58.0 | 58.0 | 58.0 | 58.0 | 58.0 | 58.0 |
| Tallow Fatty Amine with 10 to 20 moles EO | 5.0 | 5.0 | 5.0 | 5.0 | 5.0 | 5.0 |
| Monoethylene glycol | 33.0 | | | | | |
| Monoethylene glycol / Diethylene glycol 1:1 w/w | | 33.0 | | | | |
| Monoethylene glycol / Propylene glycol 1:1 w/w | | | 33.0 | | | |
| Diethylene glycol | | | | 33.0 | | |
| Diethylene glycol / Propylene glycol 1:1 w/w | | | | | 33.0 | |
| Propylene glycol 1 : w/w | | | | | | 33.0 |
| Water | 4.0 | 4.0 | 4.0 | 4.0 | 4.0 | 4.0 |
| **Formulation stability of N-fosfonometilglicina Monoethanolamine salt 480 g/L formulation with 12% w/w of adjuvant** | | | | | | |
| 03 months aging 54°C [130° F] | Stable, free of turbidness, or phase separation | | | | | |
| 03 months aging -10°C [14° F] | Stable, free of turbidness, or phase separation | | | | | |

### Examples - 31 to 36 (Glyphosate Monoethanolamine salt)

### Example - 31

Mixture of 58 % w/w alkoxylated tallow fatty amine with a distribution from about 1 to about 9 moles of ethylene oxide, add 38 % w/w ethylene glycol and 4.0 % w/w water. Mixture should be carried under moderate stirring about 100 rpm and 60° C

### Example - 32

Mixture of 58 % w/w alkoxylated tallow fatty amine with a distribution from about 1 to about 9 moles of ethylene oxide, 19.0% w/w ethylene glycol, 19.0% w/w diethylene glycol and 3,5 % w/w water. Mixture should be carried under moderate stirring about 100 rpm and 60° C.

### Example - 33

Mixture of 58 % w/w alkoxylated tallow fatty amine with a distribution from about 1 to about 9 moles of ethylene oxide, 19.0% w/w ethylene glycol, 19.0% w/w propylene glycol and 4.0 % w/w water. Mixture should be carried under moderate stirring about 100 rpm and 60° C

### Example - 34

Mixture of 58 % w/w alkoxylated tallow fatty amine with a distribution from about 1 to about 9 moles of ethylene oxide, 38% w/w diethylene glycol and 4.0 % w/w water Mixture should be carried under moderate stirring about 100 rpm and 60° C.

### Example - 35

Mixture of 58 % w/w alkoxylated tallow fatty amine with a distribution from about 1 to about 9 moles of ethylene oxide, 19.0% w/w diethylene glycol and 19.0% w/w propylene glycol. Mixture should be carried under moderate stirring about 100 rpm and 60° C

### Example - 36

Mixture of 58 % w/w alkoxylated tallow fatty amine with a distribution from about 1 to about 9 moles of ethylene oxide, 38.0% w/w propylene glycol and 4.0 % w/w water. Mixture should be carried under moderate stirring about 100 rpm and 60° C.

**Table 6**

| **Examples** | | **31** | **32** | **33** | **34** | **35** | **36** |
|---|---|---|---|---|---|---|---|
| Tallow fatty Amine with 1 to 9 moles EO | | 58.0 | 58.0 | 58.0 | 58.0 | 58.0 | 58.0 |
| Monoethylene glycol | | 38.0 | | | | | |
| Monoethylene glycol / Diethylene glycol 1:1 w/w | | | 38.0 | | | | |
| Monoethylene glycol / Propylene glycol 1:1 w/w | | | | 38.0 | | | |
| Diethylene glycol | | | | | 38.0 | | |
| Diethylene glycol / Propylene glycol 1:1 w/w | | | | | | 38.0 | |
| Propylene glycol 1:1 w/w | | | | | | | 38.0 |
| Water | | 4.0 | 4.0 | 4.0 | 4.0 | 4.0 | 4.0 |
| **Fomrulation Stability of N-phosphonomethyl glycine Monoethanolamine salt 480 g/L formulation with 12% w/w of adjuvant** | | | | | | | |
| 03 months aging 54°C [130° F] | Stable, free of turbidness, or phase separation | | | | | | |
| 03 months aging -10°C [14° F] | Stable, free of turbidness, or phase separation | | | | | | |

Stability studies carried on "formulations 1 to 36" Glyphosate (N-phosphonomethyl glycine) and its respective salts, at 54°C and at -10°C during three months, showed stable physical aspects.

## Claims

1. High performance adjuvant composition u sed o n herbicides formulation based on N-phosphonomethyl glycine derivatives and their salts, featured by comprising:
(a) one or more alkoxylated alkyl amines;
(b) one or more glycols and their derivatives or, yet, their mixtures;
(c) optionally water

2. High performance adjuvant composition u sed o n herbicides formulation based o n N-phosphonomethyl glycine derivatives and their salts according to claim 1, featured by comprising saturated or non-saturated alkyl amines, on which the alkyl group contains from 8 to 22 linear or branched carbon atoms

3. High performance adjuvant composition u sed o n herbicides formulation based o n N - phosphonomethyl glycine derivatives and their salts according to claim 1 or 2 featured by being preferably used in alkyl groups containing from about 16 to about 18 carbon atoms

4. High performance adjuvant composition u sed o n herbicides formulation based o n N-phosphonomethyl glycine derivatives and their salts according to claim 3 featured by the fact that those alkyl amines are derived from: palmitic or hexadecanoic acid (C16), cis-9-hexadecenoic acid (C16:1), heptadecanoic acid (C17), cis-9-heptadecenoic acid (C17:1), stearic or octadecanoic acid (C18), oleic o cis-9-octadecenoic acid (C18:1), linoleic or cis-9, cis-12-octadecadienoic acid (C18:2), linoleic or cis-9, cis-12, cis-15-octadecatrienoic acid (C18:3), α-eleostearic or cis-9, trans-11, trans-13-octadecatrienoic acid (C18:3), 4-oxo-cis 9, trans-11, trans-13 octadecatrienoic acid (C18:3), ricinoleic or 12-hydroxy-cis-9-octadecenoic acid (C18:1), di-hydroxy stearic acid (C18) or, yet, from their mixtures.

5. High performance adjuvant composition u sed o n herbicides formulation based o n N-phosphonomethyl glycine derivatives and their salts according to claim 1 featured by the fact that alkyl amines are from vegetable origin, such as soybean, or derived from aminals, such as tallow amine.

6. High performance adjuvant composition u sed o n herbicides formulation based o n N - phosphonomethyl glycine derivatives and their salts according to claim 1 or 2 featured by using tallow alkanolamine.

7. High performance adjuvant composition u sed o n herbicides formulation based on N-phosphonomethyl glycine derivatives and their salts according to claim 6 featured by using soybean alkanolamine.

8. High performance adjuvant composition u sed on herbicides formulation based on N - phosphonomethyl glycine derivatives and their salts according to claim 1 or 2 featured by the fact that alkyl amines present high alkoxylation degree of about 1 to 20.

9. High performance adjuvant composition u sed o n herbicides formulation based o n N-phosphonomethyl glycine derivatives and their salts according to claim 1 featured by the fact that alkoxy group preferably presents 2 or 3 carbon atoms, preferably ethylene and/or propylene oxide.

10. High performance adjuvant composition used on herbicides formulation based on N-phosphonomethyl glycine derivatives and their salts according to claim 9 featured by the fact that alkoxy group is preferably ethylene oxide.

11. High performance adjuvant composition used on herbicides formulation based on N-phosphonomethyl glycine derivatives and their salts according to claim 1 featured by the fact that glycols or their usable derivatives are selected among the group that includes: MEG (monoethylene glycol), DEG (diethylene glycol), TEG (triethylene glycol), PGI (propylene glycol), other types of ethylene glycol monomers and/or comonomers or, yet, their mixtures, such as monoethylene glycol and diethylene glycol mixture, or monoethylene glycol and propylene glycol, among others

12. High performance adjuvant composition used on herbicides formulation based on N-phosphonomethyl glycine derivatives and their salts according to claims 1 or 11 featured by preferably using MEG, monoethylene glycol, or its derivatives.

13. High performance adjuvant composition used on herbicides formulation based on N-phosphonomethyl glycine derivatives and their salts according to claim 1 featured by using from about 40 to about 80 % in weight in relation to component (a) composition total mass, alkoxylated alkyl amines

14. High performance adjuvant composition used on herbicides formulation based on N-phosphonomethyl glycine derivatives and their salts according to claim 1 featured by using at least about 11 % in weight in relation to one or more glycol or component (b) composition total mass.

15. High performance adjuvant composition used on herbicides formulation based on N-phosphonomethyl glycine derivatives and their salts according to claim 14 featured by using a at least about 25 % in weight in relation to one or more glycol or component (b) composition total mass.

16. High performance adjuvant composition used on herbicides formulation based on N-phosphonomethyl glycine derivatives and their salts according to claim 1 featured by using from about 0 to about 10 % in water weight in relation to composition total mass.

17. High performance adjuvant composition used on herbicides formulation based on N-phosphonomethyl glycine derivatives and their salts according to claim 1 featured by the fact that total adjuvant composition, in solution or stable dispersion in water may comprise a total amount of surfactants at least from about 60 g/L in the total pesticide formulation.

18. High performance adjuvant composition used on herbicides formulation based on N-phosphonomethyl glycine derivatives and their salts according to claim 17 featured by particularly comprising from about 90 g/L to about 150 g/l of surfactant mixture in the total formulation,

19. High performance adjuvant composition used on herbicides formulation based on N-phosphonomethyl glycine derivatives and their salts according to claim 1 featured by being preferably used on herbicides formulations based on n-phosphonomethyl glycine in the form of potassium, monoisopropylamine or monoethanolamine salts.
